**Europäisches Patentamt**

(19) **European Patent Office**

**Office européen des brevets**

(11) Veröffentlichungsnummer: **0 242 352**

**B1**

(12) # EUROPÄISCHE PATENTSCHRIFT

(45) Veröffentlichungstag der Patentschrift:
**12.07.89**

(51) Int. Cl.⁴: **B 27 B 7/00,** B 27 B 1/00,
B 27 L 11/00, B 27 B 31/08

(21) Anmeldenummer: **85902497.8**

(22) Anmeldetag: **25.04.85**

(86) Internationale Anmeldenummer:
**PCT/EP 85/00185**

(87) Internationale Veröffentlichungsnummer:
**WO 85/05063 (21.11.85 Gazette 85/25)**

(54) **VORRICHTUNG ZUR SPANENDEN BEARBEITUNG DER SEITEN VON HOLZSTÄMMEN.**

(30) Priorität: **28.04.84 DE 3415932**

(43) Veröffentlichungstag der Anmeldung:
**28.10.87 Patentblatt 87/44**

(45) Bekanntmachung des Hinweises auf die Patenterteilung:
**12.07.89 Patentblatt 89/28**

(84) Benannte Vertragsstaaten:
**AT DE SE**

(56) Entgegenhaltungen:
**DE-A-1 905 744**
**DE-A-3 222 824**
**US-A-4 239 069**

(73) Patentinhaber: **Gebrüder Linck Maschinenfabrik "Gatterlinck" GmbH & Co. KG, Appenweierer Strasse 46 Postfach 1341, D-7602 Oberkirch (DE)**

(72) Erfinder: **Der Erfinder hat auf seine Nennung verzichtet**

(74) Vertreter: **Katscher, Helmut, Dipl.- Ing., Bismarckstrasse 29, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 242 352 B1

## Beschreibung

Die Erfindung betrifft eine Vorrichtung zur allseitigen spanenden Bearbeitung von Holzstämmen zur Erzeugung von Seitenbrettern und /oder Hackschnitzeln mittels als Kreissägen und /oder Messerköpfe ausgeführten Werkzeugen, die am Umfang verteilte Werkzeugschneiden aufweisen, wobei die Drehachsen der Kreissägen unter einem Winkel von 45° schräg zur Senkrechten ausgerichtet sind und wobei die Kreissägen in zwei Bearbeitungsstationen angeordnet sind, die die Baumstämme nacheinander durchlaufen.

Zur Erzeugung von Hackschnitzeln aus den Seitenteilen von in ihrer Längsrichtung transportierten Holzstämmen, die Rundholzstämme oder bereits zweiseitig angeflachte Model sein können, werden Messerköpfe verwendet, deren Drehachsen sich quer zur Holzlängsrichtung erstrecken. Das Absägen der Seitenbretter erfolgt bei einer bekannten Vorrichtung (DE-PS2 928 949) durch Doppelkreissägen, deren beide Kreissägeblätter jeweils mit zueinander parallelen Drehachsen angeordnet sind, die zugleich in Holzlängsrichtung versetzt angeordnet sind, so daß sich die von den beiden Kreissägen erzeugten Schnittfugen in Holzlängsrichtung gesehen überdecken, ohne daß sich die Kreissägen berühren.

Bei einer bekannten Vorrichtung der eingangs genannten Gattung (US-A-4 239 069) werden in einem kontinuierlichen Arbeitsablauf an den Seiten von Baumstämmen Seitenbretter und Hackschnitzel erzeugt. Die dabei aus den mittleren Abschnitten der Baumstämme gebildeten Kanthölzer oder Balken haben eine teilweise gesägte und teilweise gefräste bzw. gehobelte Oberfläche.

Ausgehend von diesem Stand der Technik besteht die Aufgabe der vorliegenden Erfindung deshalb darin, eine Vorrichtung der eingangs genannten Gattung so auszubilden, daß sämtliche entstehenden Oberflächen am Kantholz ohne Unterbrechungen in gesägter Qualität ausgeführt werden.

Diese Aufgabe wird erfindungsgemäß dadurch gelöst, daß in jeder Bearbeitungsstation zwei einander gegenüberliegende Seitenflächen der Baumstämme durch jeweils eine Gruppe von zwei Werkzeugen bearbeitet werden, die mit zueinander parallelen Drehachsen angeordnet sind und in entgegengesetzten Drehrichtungen im Zwangssynchronlauf angetrieben werden, daß die beiden Werkzeuge jeder Gruppe jeweils stirnseitig mit einem ersten Kreissägeblatt versehene Messerköpfe aufweisen, daß koaxial und im Abstand zu jedem Messerkopf ein zweites Kreissägeblatt angeordnet ist, daß die Flugkreise der beiden Werkzeuge jeder Gruppe einander überlappen und daß die Werkzeugschneiden jedes Werkzeugs berührungsfrei in die Lücken zwischen den Werkzeugschneiden des jeweils anderen Werkzeugs eingreifen.

Die beiden vor jedem Messerkopf im Abstand zueinander angeordneten Kreissägeblätter erzeugen zwischen sich ein Seitenbrett, dessen beide Flächen gesägt sind. Zugleich werden alle Seitenflächen des aus dem mittleren Bereich eines Baumstammes erzeugten Kantholzes oder Balkens vollständig in gesägter Qualität erzeugt. Die paarweise Anordnung der jeweils aus zwei Kreissägen und einem Messerkopf bestehenden Werkzeuge mit einander überlappenden Flugkreisen und ineinandergreifenden Werkzeugschneiden ermöglicht es, jeweils die gesamte Seitenfläche des Kantholzes oder Balkens zu sägen, ohne daß hierfür sehr große Sägendurchmesser erforderlich wären.

Die paarweise Anordnung von im Zwangssynchronlauf angetriebenen Kreissägeblättern, deren Flugkreise einander überlappen und die mit ihren Werkzeugschneiden ineinandergreifen, ist zwar bekannt (DE-A-1 005 744), wobei auch mehrere Kreissägeblätter axial im Abstand zueinander angeordnet sind. Hierbei sind die Kreissägeblätter jedoch nicht mit Messerköpfen verbunden; es werden keine Hackschnitzel erzeugt; es handelt sich vielmehr nur um eine Sägemaschine. Hierbei werden auch nur zwei einander gegenüberliegende Seiten des Baumstammes bearbeitet; es sind keine aufeinanderfolgenden, nacheinander von den Baumstämmen durchlaufene Bearbeitungsstationen vorgesehen.

Vorteilhafte Ausgestaltungen des Erfindungsgedankens sind Gegenstand von abhängigen Ansprüchen. Zum Anspruch 4 wird auf den Stand der Technik nach der DE-A- 32 22 824 hingewiesen. Von der dort gezeigten Vorrichtung ist es bekannt, an gegenüberliegenden Seiten an einen bearbeiteten Baumstamm andrückbare Führungsrollen vorzusehen, die dazu dienen, das Herabfallen der Seitenbretter zu steuern. Diese Führungsrollen sind jedoch nur in einer horizontalen Ebene bewegbar; es werden nur die auf den beiden gegenüberliegenden Seiten des Baumstammes anfallenden Seitenbretter gehalten bzw. abgeworfen.

Die Erfindung wird nachfolgend an Ausführungsbeispielen näher erläutert, die in der Zeichnung dargestellt sind. Es zeigt:

Figur 1　　eine mit Messerköpfen und Kreissägen versehene Vorrichtung zur Bearbeitung der Seiten von Holzstämmen zur Erzeugung von Seitenbrettern und Hackschnitzeln,

Figur 2　　einen Schnitt längs der Linie II - II in Figur 1,

Figur 3　　einen Schnitt längs der Linie III - III in Figur 1,

Figur 4　　eine Ansicht in Richtung des Pfeiles IV in Figur 1,

Figur 5　　die Bearbeitung eines Rundholzstammes mittels zwei Vorrichtungen, wie sie in Figur 1 gezeigt sind,

Figur 6　　in einer Seitenansicht eine Anlage zur Bearbeitung von Holzstämmen, in der die Vorrichtungen nach den Figuren 1 bis 5 eingesetzt sind,

Figur 7    einen vergrößerten Schnitt längs
         der Linie VII VII - VII in Figur 6,
Figur 8    einen vergrößerten Schnitt längs
         der Linie VIII - VIII in Figur 6,
Figur 9    einen vergrößerten Schnitt längs
         der Linie IX - IX in Figur 6,
Figur 10   einen vergrößerten Schnitt längs
         der Linie X - X in Figur 6,
         Figuren
11 und 12  vergrößerte Schnitte längs der Linie
         XI - XI in Figur 6 und
         Figuren
13 und 14  vergrößerte Schnitte längs der Linie
         XIII - XIII in Figur 6 jeweils in
         unterschiedlichen Arbeitsstellungen.

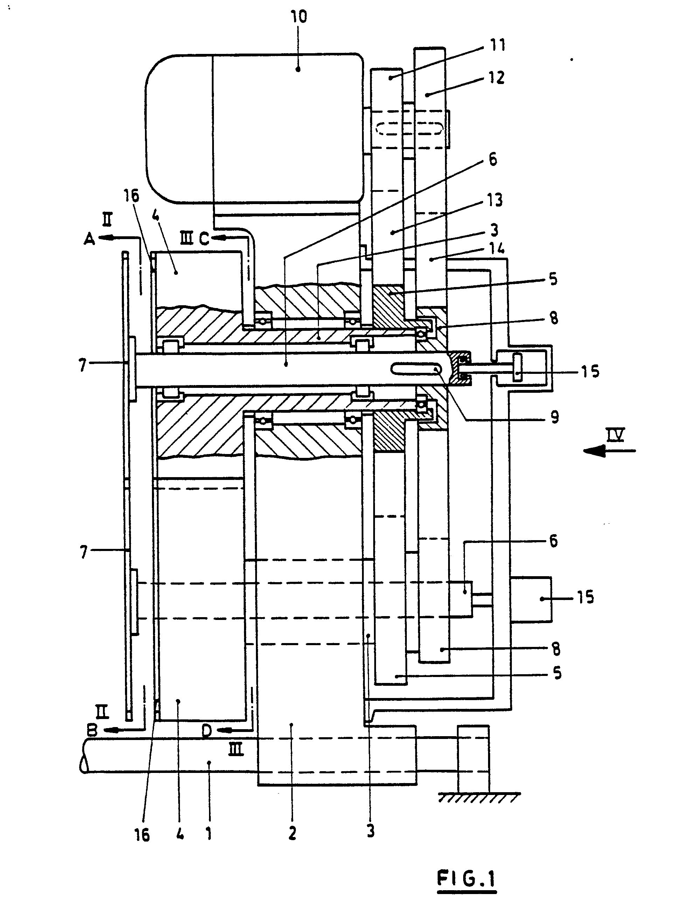

Figur 1 zeigt einen auf Führungen 1 verschiebbaren Schlitten 2, in dem parallel und im Abstand übereinander zwei Hohlwellen 3 drehbar gelagert sind, die jeweils ah ihrem vorderen Ende einen Messerkopf 4 und an ihrem hinteren Ende eine Zahnriemenscheibe 5 tragen. In der Hohlwelle 3 ist drehbar und axial verschiebbar jeweils eine Sägewelle 6 gelagert, die an ihrem vorderen Ende eine Kreissäge 7 trägt. Am hinteren Ende der Hohlwelle 3 ist jeweils eine Zahnriemenscheibe 8 drehbar gelagert,die über eine Paßfeder 9 mit der Sägewelle 6 in Drehverbindung steht.

Auf dem Schlitten 2 ist ein gemeinsamer Antriebsmotor 10 angeordnet, der zwei Zahnriemenscheiben 11 und 12 trägt, die jeweils über einen Zahnriemen 13 bzw. 14 die Riemenscheiben 5 bzw. 8 und damit die Hohlwellen 3 bzw. die Sägewellen 6 antreibt. Mittels Druckmittelzylindern 15 können die Sägewelle 6 und damit die Kreissägen 7 axial verstellt werden.

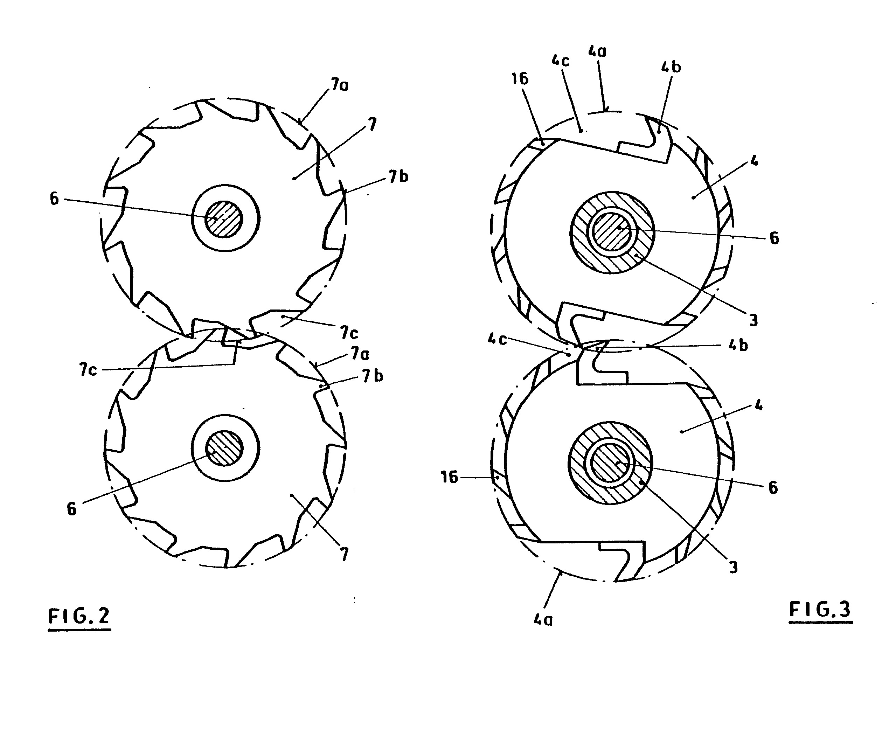

Aus den Figuren 2 und 3 erkennt man, daß sich die Flugkreise 7a der Kreissägen 7 teilweise überlappen. Die Werkzeugschneiden der Kreissägen 7, die von den Sägezähnen 7b gebildet werden, greifen berührungsfrei in die Zahnlücken 7c der jeweils anderen Kreissäge 7.

In entsprechender Weise überlappen sich auch die Flugkreise 4a der beiden Messerköpfe 4. Die als Hackmesser 4b ausgebildeten Werkzeugschneiden der Messerköpfe 4 greifen jeweils berührungsfrei in die vor oder hinter den Hackmessern 4b des jeweils anderen Messerkopfes 4 gebildeten Lücken 4c. Beim dargestellten Ausführungsbeispiel ist stirnseitig an jedem Messerkopf 4 ein weiteres Kreissägeblatt 16 befestigt. Die Flugkreise der beiden Kreissägeblätter 16 überlappen sich ebenfalls in der beschriebenen Weise.

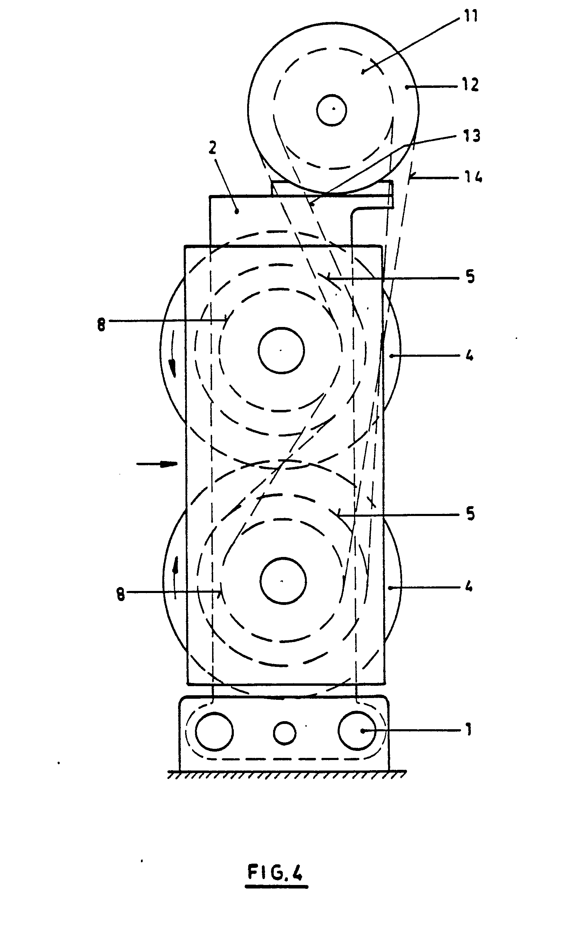

Aus Figur 4 erkennt man, daß die Zahnriemen 13 und 14 die angetriebenen Riemenscheiben 5 bzw. 8 jeweils in entgegengesetzter Richtung umschlingen. Die Zahnriemen 13 und 14 sind beiderseits mit Zähnen besetzt. Dadurch werden die beiden Messerköpfe 4 im Zwangssynchronlauf in entgegengesetzter Richtung angetrieben. Ebenso werden die beiden Kreissägen 7 im Zwangssynchronlauf in entgegengesetzter Drehrichtung angetrieben. Die Durchmesserverhältnisse der Zahnriemenscheiben 5, 8, 11 und 12 sind so gewählt daß die Kreissägen 7 mit höherer Drehzahl als die Messerköpfe 4 angetrieben werden. Die Zahnriementriebe bilden jeweils ein formschlüssiges, schlupffreies Getriebe, durch das ein Antrieb der Messerköpfe 4 bzw. der Kreissägen 7 in der Weise sichergestellt ist, daß die ineinandergreifenden Werkzeugschneiden einander nicht berühren, wobei sich ihre Flugkreise und damit ihre Arbeitsbereiche jedoch überlappen.

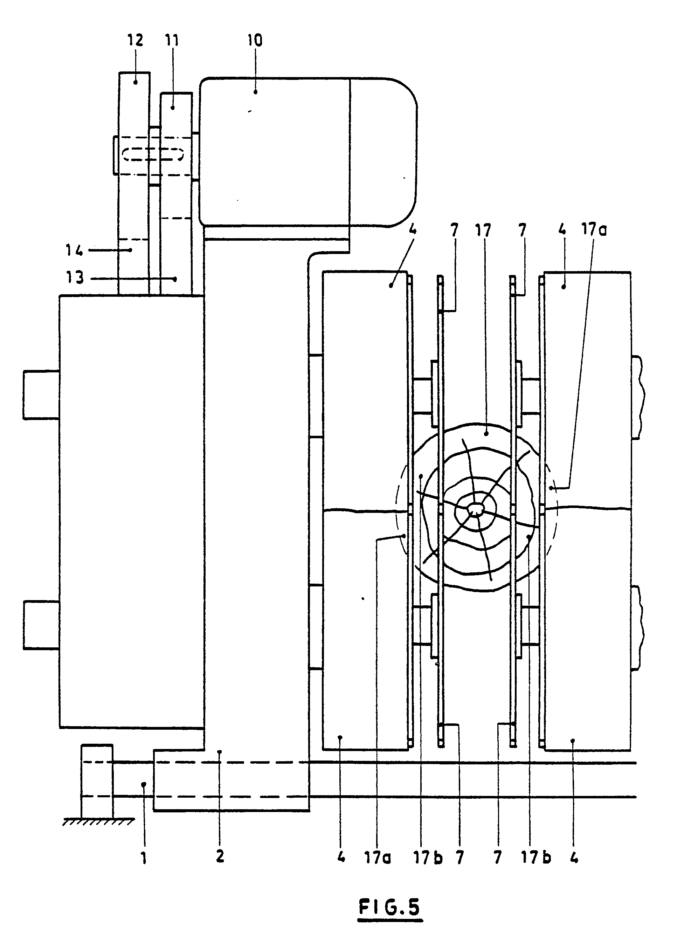

Figur 5 zeigt die Bearbeitung eines Rundholzstammes 17 mit zwei Vorrichtungen, wie sie in den Figuren 1 bis 4 gezeigt sind. Der einfacheren Darstellung halber ist die eine Vorrichtung rechts in Figur 5 nur zum Teil dargestellt. Mit den Messerköpfen 4 werden die äußersten seitlichen Abschnitte 17a des Rundholzstammes 17 zu Hackschnitzeln verarbeitet, während die Kreissägen 7 Seitenbretter 17b vom Rundholzstamm 17 absägen, aus dem auf diese Weise ein beidseitig angeflachtes Model entsteht, dessen beide noch unbearbeitete Seiten noch anschließend in gleicher Weise bearbeitet werden können.

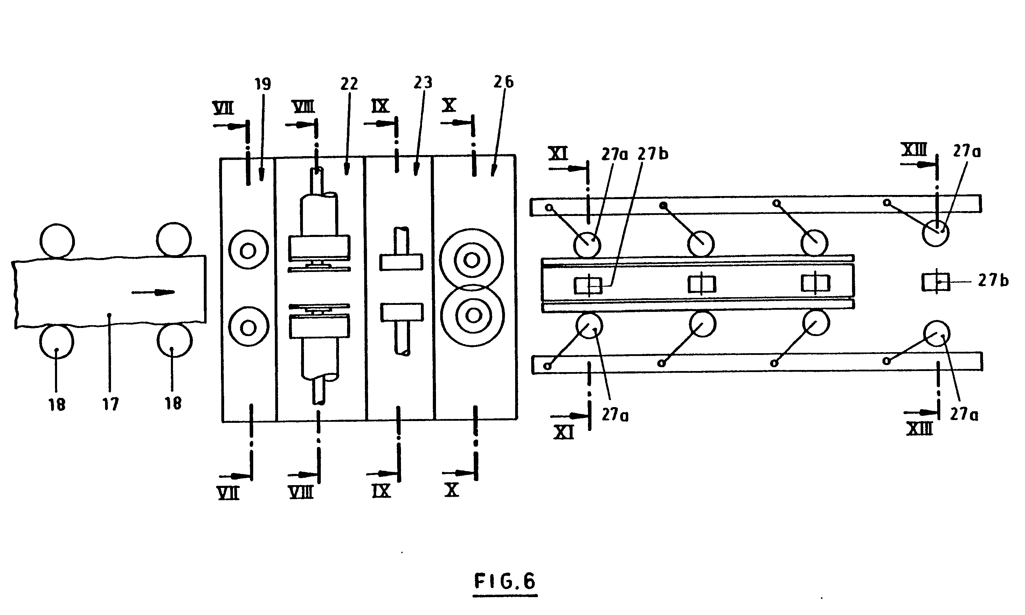

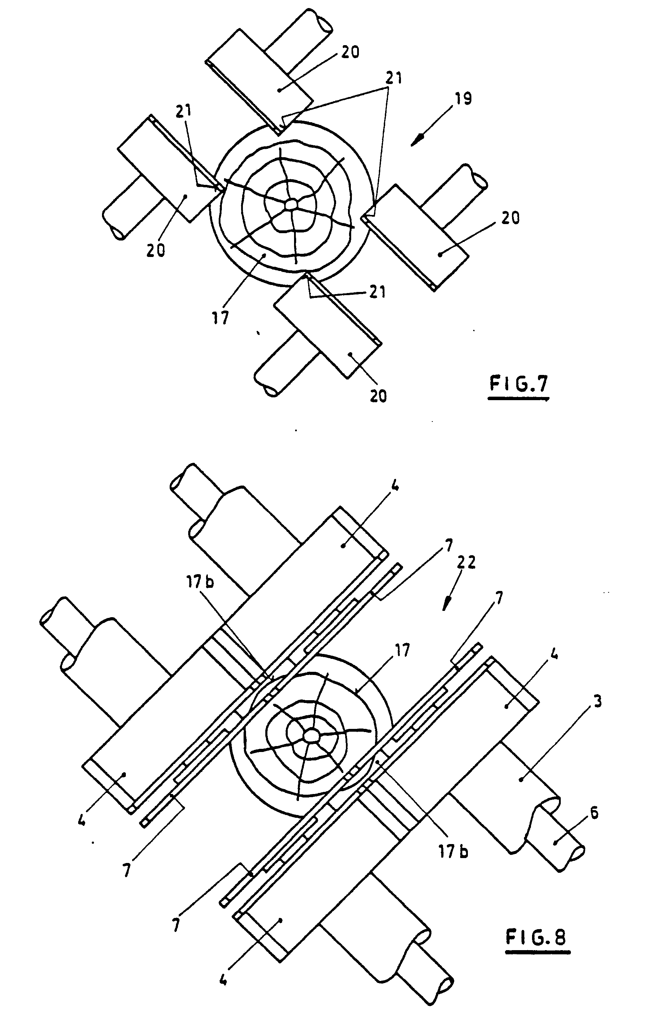

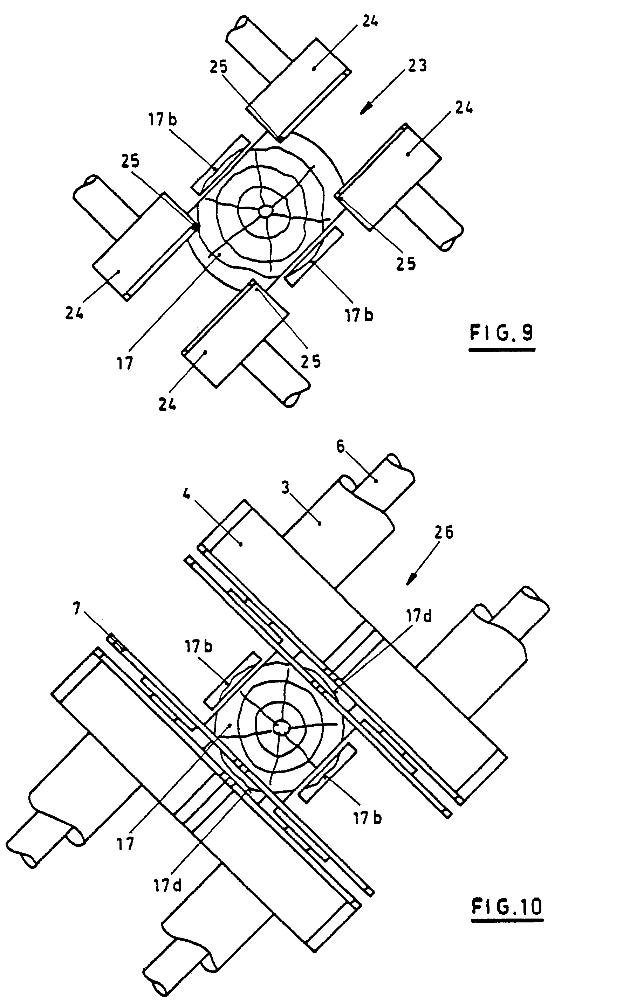

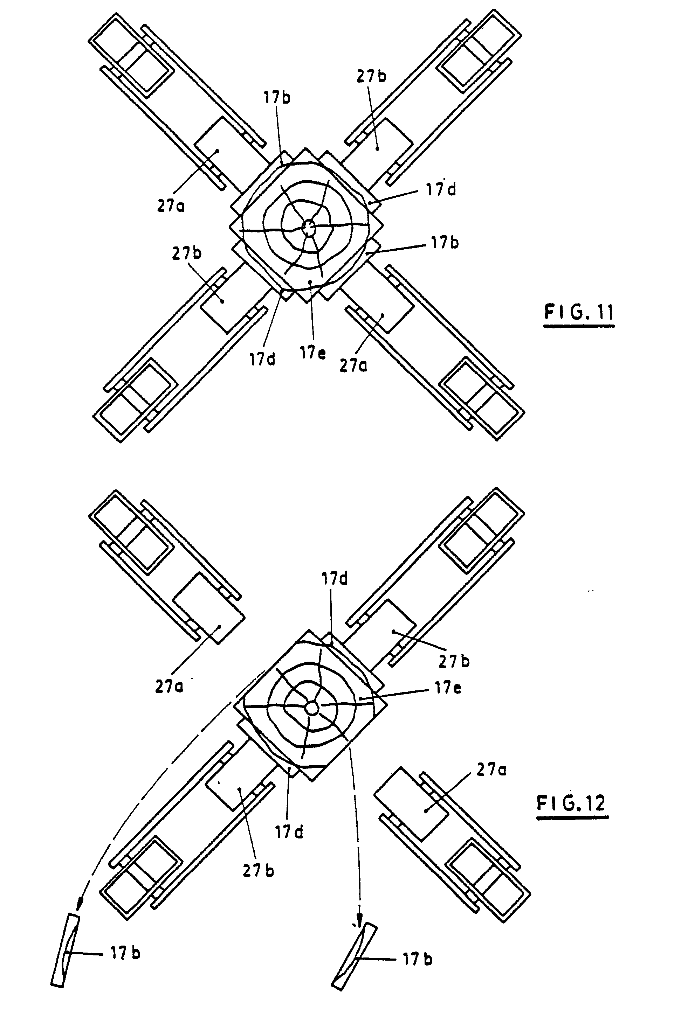

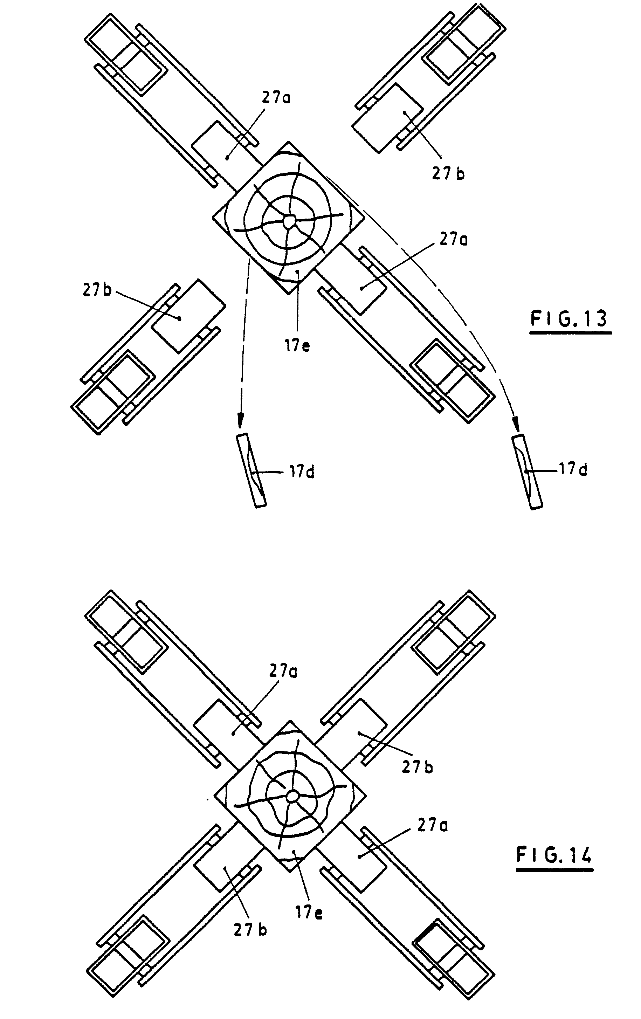

Figur 6 zeigt eine Anlage zur Bearbeitung von Rundholzstämmen 17, die zwischen Vorschubwalzen 18 zugeführt werden. Die einzelnen nachfolgenden Bearbeitungsstationen sind in Figur 6 vereinfacht in einer Seitenansicht dargestellt, wobei die Drehachsen der verwendeten Messerköpfe und Kreissägen horizontal und vertikal angeordnet sind. Abweichend von dieser Anordnung ist in den Schnitten in den Figuren 7 bis 14 dargestellt, daß gemäß einer bevorzugten Ausführungsform der Erfindung diese Drehachsen auch unter fünfundvierzig Grad angeordnet werden können. Auf diese Anordnung wird bei der nachfolgenden gemeinsamen Beschreibung der Figur 6 einerseits und der Figuren 7 bis 14 andererseits Bezug genommen.

Der noch unbearbeitete Rundholzstamm 17 gelangt zunächst in eine Frässtation 19 (Figur 7), in der durch vier Kantenfräser 20 vier Kanten 21 ausgefräst werden. An diesen Kanten 21 wird der Holzstamm 17 anschließend durch (nicht dargestellte) Führungen geführt. Der Holzstamm 17 gelangt unmittelbar anschließend in eine Bearbeitungsstation 22 (Figur 8), in der eine Vorrichtung entsprechend der Figur 5 angeordnet ist. Deren Messerköpfe 4 zerspanen die gegenüberliegenden äußeren Abschnitte des Holzstammes 17 zu Hackschnitzeln, während die Kreissägen 7 in der schon beschriebenen Weise jeweils ein Seitenbrett 17b abtrennen, dessen beide Ränder bereits durch die Kantenausfräsungen 21 besäumt sind.

Wie man aus Figur 9 erkennt, behalten die Seitenbretter 17b in der nachfolgenden Frässtation 23 ihre Lage zu dem Holzstamm 17 bei, während durch vier Kantenfräser 24 weitere Kanten 25 ausgefräst werden. An diesen ausgefrästen Kanten 25 kann der Holzstamm 17 weitergeführt werden, bevor er in eine weitere Bearbeitungsstation 26 (Figur 10) eintritt, die entsprechend der Bearbeitungsstation 22 aufgebaut ist, wobei jedoch die Achsen der Messerköpfe 4 und der Kreissägen 7 um neunzig Grad zu denen in der Station 22 ausgerichtet sind. Hier werden die zunächst noch unbearbeitet gebliebenen gegenüberliegenden Seiten des Holzstammes 17 in gleicher Weise wie in der Station 22 bearbeitet, d. h. es werden Hackschnitzel und Seitenbretter 17d erzeugt.

Wenn der Holzstamm 17 die letzte Bearbeitungsstation 26 verläßt, ist er zu einem Balken oder Kantholz 17e geworden, an dessen vier Seitenflächen die abgesägten Seitenbretter 17b und 17d liegen, die durch bewegliche Transportund Führungsrollen 27a, 27b an den Balken 17e angedrückt werden.

Sobald sich der Balken 17e und die Seitenbretter 17b und 17d vollständig außerhalb der letzten Bearbeitungsstation 26 und zwischen den Führungsrollen 27a, 27b befinden, wie in Figur 6 dargestellt, werden jeweils auf zwei gegenüberliegenden Flächen die Führungsrollen 27a durch eine (nicht dargestellte) Betätigungseinrichtung abgehoben, wie in Figur 12 gezeigt, so daß die beiden Seitenbretter 17b herabfallen können und wegtransportiert werden. Die an den beiden anderen einander gegenüberliegenden Seitenbrettern 17d anliegenden Führungsrollen 27b halten dabei den Balken 17e und führen ihn. Wenn die Seitenbretter 17b abgefallen sind, werden die Führungsrollen 27a wieder an den Balken 17e angedrückt und die anderen Führungsrollen 27b werden abgehoben, so daß jetzt auch die beiden Seitenbretter 17d herabfallen können (Figur 13). Die Führungsrollen 27a werden anschließend ebenfalls wieder an den Balken 17e angelegt, der daraufhin wieder von allen vier Seiten geführt und weitertransportiert wird (Figur 14).

Die in den Figuren 7 bis 14 dargestellte schräge Anordnung der Bearbeitungs- und Führungseinrichtungen, die dazu führt, daß die entstehenden Seitenflächen des Balkens 17e ebenfalls alle unter fünfundvierzig Grad zur Senkrechten verlaufen, hat zur Folge, daß die Seitenbretter 17b und 17d rasch und zuverlässig herabfallen, sobald die jeweiligen Führungsrollen 27a bzw. 27b abgehoben werden.

Die Antriebsrichtung der Messerköpfe 4 wird so gewählt, daß diese im Gleichlauf mit der Vorschubbewegung des Holzstammes 17 arbeiten, wie in Figur 4 durch Pfeile angedeutet ist. Dadurch werden Hackschnitzel hoher Qualität erzeugt. Entsprechend arbeiten beim dargestellten Ausführungsbeispiel auch die Kreissägen 7 im Gleichlauf mit der Vorschubbewegung des Holzstammes 17.

Wenn die Bearbeitung des Holzstammes 17 nur mit Kreissägen 7, 16 erfolgt, wenn also die äußeren Teile 17a nicht zu Hackschnitzel sondern zu Schwartenbrettern werden, können die Kreissägen 7 bzw. 16 entweder im Gleichlauf oder im Gegenlauf mit der Vorschugbewegung des Holzstammes 17 angetrieben werden.

In den Figuren 6, 7 und 9 wurde gezeigt, daß die Kanten 21 und 25 nacheinander ausgefräst werden. Statt dessen ist es auch möglich, diese Kanten 21 und 25 gleichzeitig auszufräsen.

Abweichend von dem dargestellten Ausführungsbeispiel können auf jeder Seite des Holzstammes 17 auch mehrere Seitenbretter abgesägt werden; hierfür kann beispielsweise eine zusätzliche Kreissäge im Abstand zu der Kreissäge 7 auf der Sägewelle 6 angebracht werden.

## Patentansprüche

1. Vorrichtung zur allseitigen spanenden Bearbeitung von Holzstämmen zur Erzeugung von Seitenbrettern, Hackschnitzeln und Kantholz mittels als Kreissägen und/oder Messerköpfe ausgeführten Werkzeugen, die am Umfang verteilte Werkzeugschneiden aufweisen, wobei die Drehachsen der Kreissägen unter einem Winkel von 45° schräg zur Senkrechten ausgerichtet sind und wobei die Kreissägen in zwei Bearbeitungsstationen angeordnet sind, die in Umfangsrichtung versetzt sind, und die die Baumstämme nacheinander durchlaufen, dadurch gekennzeichnet, daß in jeder Bearbeitungsstation zwei einander gegenüberliegende Seitenflächen der Baumstämme (17) bearbeitet werden, wobei für jede Seitenfläche eine Gruppe von zwei Werkzeugen (4, 7, 16) vorhanden ist, die mit zueinander parallelen Drehachsen angeordnet sind und in entgegengesetzten Drehrichtungen im Zwangssynchronlauf angetrieben werden, und wobei diese Drehachsen in einer senkrecht zur Durchlaufrichtung liegenden Ebene angeordnet sind, daß die beiden Werkzeuge jeder Gruppe jeweils stirnseitig mit einem ersten Kreissägeblatt (16) versehene Messerköpfe (4) aufweisen, daß koaxial und im Abstand zu jedem Messerkopf (4) ein zweites Kreissägeblatt (7) angeordnet ist, daß die Flugkreise (4a, 7a) der beiden Werkzeuge (4, 7, 16) jeder Gruppe einander überlappen und daß die Werkzeugschneiden (4b, 7b) jedes Werkzeugs (4, 7, 16) berührungsfrei in die Lücken (4c, 7c) zwischen den Werkzeugschneiden (4b, 7b) des jeweils anderen Werkzeugs (4, 7, 16) eingreifen.

2. Vorrichtung nach Anspruch 1, dadurch gekennzeichnet, daß die beiden Werkzeuge (4, 7, 16) jeder Gruppe durch einen gemeinsamen Antriebsmotor (10) über jeweils ein formschlüssiges, schlupffreies Getriebe (5, 8, 11, 12, 13, 14) angetrieben werden.

3. Vorrichtung nach Anspruch 2, dadurch gekennzeichnet, daß das Getriebe ein Zahnriementrieb ist, dessen beidseitig mit Zähnen versehener Zahnriemen (13 bzs. 14) auf den Wellen (3, 6) der beiden Werkzeuge (4, 7) sitzende Zahnriemenscheiben (5, 8) abwechselnd in entgegengesetzter Richtung umschlingt.

4. Vorrichtung nach Anspruch 1, dadurch gekennzeichnet, daß nach den Bearbeitungsstationen anhebbare und andrückbare Führungsrollen (27a, 27b) vorgesehen sind, die die erzeugten Seitenbretter (17b, 17d) bzw. einen dazwischen gebildeten Balken (17e) führen, wobei abwechselnd die Führungsrollen (27a bzw. 27b) zweier gegenüberliegender Seitenflächen der Baumstämme (17) abhebbar sind, während die Führungsrollen (27b bzw. 27a) der jeweils anderen, unter 90° hierzu liegenden Seitenflächen der Baumstämme (17) in Führungseingriff bleiben.

## Claims

1. Device for shaving the sides of tree trunks for the production of boards, chips and squared timber by means of tools of the type of circular saws and/or cutting heads which have tool lips distributed on the circumference, the rotation axes of the circular saws being aligned at an angle of 45° obliquely to the perpendicular, and the circular saws being arranged in two processing stations which are offset in the circumferential direction and which run through the tree trunks in succession, characterised by the fact that in each processing station two opposite lateral surfaces of the tree trunks (17) are processed, for each lateral surface one group of two tools (4, 7, 16) being present, arranged with the axes of rotation parallel to each other and driven in opposed directions of rotation in forced synchronous running, these axes of rotation being arranged in a plane lying perpendicular to the direction of pass, that the two tools of each group in each case have cutting heads (4) fitted at the front with a first circular saw blade (16), that a second circular saw blade (7) is arranged coaxially with and at a distance from each cutting head (4), that the cutting circles (4a, 7a) of the two tools (4, 7, 16) of each group overlap each other and that the tool lips (4b, 7b) of each tool (4, 7, 16) engage without contact into the spaces (4c, 7c) between the tool lips (4b, 7b) of each other tool (4, 7, 16).

2. Device according to Claim 1, characterised by the fact that the two tools (4, 7, 16) of each group are driven by a common drive motor (10) in each case through a positive, non-slip transmission (5, 8, 11, 12, 13, 14).

3. Device according to Claim 2, characterised by the fact that the transmission is a toothed belt drive, the toothed belt of which (13 or 14), provided with teeth on both sides, goes round toothed belt pinions (5, 8), seated on the shafts (3, 6) of the two tools (4, 7), alternately in opposite directions.

4. Device according to Claim 1, characterised by the fact that, after the processing stations, guide rollers (27a, 27b) are fitted, which can be raised and pressed against, which guide the lateral boards produced (17b, 17d) or a beam (17e) formed between them, it being possible to raise alternately the guide rollers (27a, 27b) of two opposite lateral surfaces of the tree trunks (17), whilst the guide rollers (27a or 27b) of each of the other lateral surfaces of the tree trunks (17) remain engaged for guiding.

## Revendications

1. Dispositif pour l'usinage de toute part et avec enlèvement de copeaux de troncs d'arbres en vue de réaliser des planches latérales, des rognures de hachage et du bois équarri au moyen d'outils réalisés sous forme de scies circulaires et/ou de têtes de lames comportant des tranchants d'outillage répartis sur la périphérie, les axes de rotation des scies circulaires étant orientés en oblique par rapport à la verticale sous un angle de 45° et les scies circulaires étant disposées dans deux postes d'usinage qui sont décalés dans le sens périphérique et qui parcourent successivement les troncs d'arbres, caractérisé en ce que, dans chaque poste d'usinage, deux faces latérales des troncs d'arbres (17), se faisant mutuellement face sont usinées, un groupe de deux outils de travail (4, 7, 16) étant prévu pour chaque face latérale, ces outils étant montés avec des axes de rotation mutuellement parallèles et étant entraînés en marche synchrone forcée dans des directions de rotation opposées, ces axes de rotation étant disposés dans un plan perpendiculaire au sens de passage, en ce que les deux outils de travail de chaque groupe comportent sur chacune de leur face frontale, des têtes de lames (4) pourvues d'une première lame (16) de scie circulaire, en ce que coaxialement et à l'écart de chaque tête de lame (4), est disposée une deuxième lame (7) de scie circulaire, en ce que les cercles opérationnels (4a, 7a) des deux outils de travail (4, 7, 16) de chaque groupe se chevauchent mutuellement et en ce que les tranchants (4b, 7b) de chaque outil (4, 7, 16) s'engagent sans contact dans les vides (4c, 7c) ménagés entre les tranchants (4b, 7b) de chaque autre outil (4, 7, 16).

2. Dispositif selon la revendication 1, caractérisé en ce que les deux outils de travail (4, 7, 16) de chaque groupe sont entraînés par un moteur commun (10) chaque fois à l'intervention d'un mécanisme (5, 8, 11, 12, 13, 14) mécanique et exempt de glissement.

3. Dispositif selon la revendication 2, caractérisé en ce que le mécanisme est une commande à courroiesdentées dont les courroies dentées (13 ou 14) pourvues de dents de part et d'autre s'enroulent alternativement dans des directions opposées autour de leur disque (5, 8) prenant appui sur les arbres (3, 6) des deux outils de travail (4, 7).

4. Dispositif selon la revendication 1, caractérisé en ce que, après les postes d'usinage, on prévoit des rouleaux de guidage (27a, 27b) pouvant être soulevés et pressés, ces rouleaux guidant les planches latérales réalisées (17b, 17d) ou une poutre (17e) formée entre elles, les rouleaux de guidage (27a ou 27b) de deux faces latérales opposées des troncs d'arbres (17) pouvant être alternativement enlevés, tandis que les rouleaux de guidage (27b ou 27a) de chacune des autres faces latéralesdes troncs d'arbres (17), disposées sous un angle de 90° par rapport à ces rouleaux, restent dans une emprise de guidage.

.

FIG.1

FIG.2

FIG.3

FIG.4

FIG.5

FIG.6

EP 0 242 352 B1

FIG.7

FIG.8

FIG.9

FIG.10

FIG. 11

FIG. 12

FIG.13

FIG.14